# EUROPEAN PATENT SPECIFICATION

(11) **EP 0 560 447 B1**
(45) Date of publication and mention of the grant of the patent: **13.05.1998**
(21) Application number: 93200673.7
(22) Date of filing: 09.03.1993
(51) Int. Cl.: C08L 71/12, C08L 77/00, C08K 5/32, C08K 5/3417

(54) **Thermoplastic composition based on polyphenylene ether and polyamide**
Thermoplastische Zusammensetzung basierend auf Polyphenylenether und Polyamid
Composition thermoplastique à base de polyéther de phénylène et de polyamide

(30) Priority: 13.03.1992 IT MI920586
(43) Date of publication of application: 15.09.1993
(73) Proprietor: ENICHEM S.p.A., 20124 Milano (IT)
(72) Inventor: Ghidoni, Dario, I-46023,Gonzaga (Mantova) (IT); Bencini, Elena, I-46030, Virgilio (Mantova) (IT)
(74) Representative: Fusina, Gerolamo

(56) References cited:
- EP-A- 0 024 120
- EP-A- 0 394 016

## Description

The present invention relates to a thermoplastic composition based on a polyphenylene ether and a polyamide.

More in particular, the present invention relates to a composition having a good balance of mechanical, physical, thermal and chemical resistance properties as well as a good processability, comprising a polyphenylene ether and a polyamide.

The polyphenylene ether resins (PPE), also known as polyphenylene oxide resins, represent a well known family of engineering polymers characterized by a good combination of thermal, mechanical and dielectrical properties within a wide temperature range. This combination of properties makes the polyphenylene ether resins suitable for use in a wide number of applications by means of injection or extrusion molding techniques.

In spite of these numerous possible commercial applications of the polyphenylene ether resins, their utilization is limited due to their poor processability mainly attributable to the low fluidity in the molten state and to the narrow range of workability which can cause some difficulties during the extrusion and injection molding operations.

A further drawback is that the polyphenylene ether resins show a poor solvent resistance after molding and a low resiliency (IZOD), thus the use thereof for certain applications is further limited.

To improve these shortcomings it has been suggested to blend the polyphenylene ether resins with other polymers which possess said lacking properties.

Thus, for example, U.S. Patent No. 3,379,792 suggests to improve the fluidity of the polyphenylene ether resins by adding a polyamide . According to the teachings of this patent, however, the blends are limited to a polyamide concentration up to 25% by weight; in fact a higher amount of polyamide involves delamination and a significant decay of the other physical-mechanical properties such as the resiliency.

It is, in fact, known from the literature that polyphenylene ether resins and polyamides are not compatible with each other or the compatibility is quite worse so that poor properties and phase separation occur especially when the polyamide concentration is rather high.

It is also known from the literature that, for overcoming this drawback, a compound reactive with both the polyphenylene ether resin and the polyamide, generally said compatibilizing agents, is added to the mixtures.

Thus, according to U.S. Patent No. 4,315,086 and the corresponding European Patent No. 24,120, compositions comprising polyphenylene ether and a polyamide, showing satisfactoring resilience characteristics and excellent processability, may be prepared by mixing the two polymers in the molten state with from 0.01 to 30% by weight of a compound selected from the group consisting of:
a) a liquid diene polymer;
b) an epoxy compound, and
c) a compound wherein both (i) an ethylenic double bond C=C or a triple bond C=C, and (ii) a carboxy, anhydrido, amido, imido, carboxylic ester, amino or hydroxy group are present in the molecule.

Japanese published Patent Application No. 84/66452 describes polymeric compositions similar to the preceding ones wherein the polyphenylene ether has been pretreated with one of the above reported olefinic compounds a) to c), in the presence of a free radical initiator .

However, the resulting compositions do not exhibit an excellent balance of properties and a continous interest exists for producing compositions of the above type showing improved properties and a combination of properties.

Tests carried out by the Applicant have now found a particular class of compatibilizing agents which allow to substantially improve the mechanical and thermal properties, the processability and/or the chemical resistance of the blends based on a polyphenylene ether and a polyamide.

Such a class of compatibilizing agents is represented by an aromatic nitro-derivative having general formula (I): 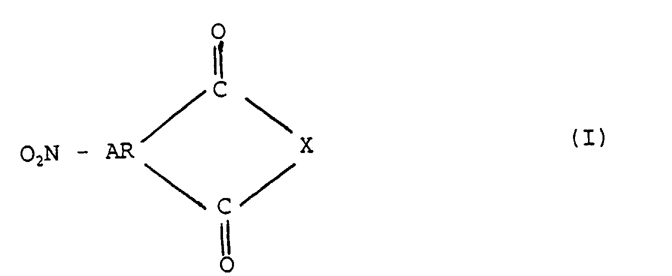 wherein:
- AR: may be phenylene or an aromatic radical constituted by 2 or 3 condensed rings; and
- X: is oxygen or N-R₁ wherein R₁ represents hydrogen, a monovalent organic radical selected from the group consisting of an alkyl group containing from 1 to 10 carbon atoms, preferably from 1 to 4 carbon atoms, a cyclo-alkyl radical containing from 3 to 8 carbon atoms and an aromatic radical having from 6 to 20 carbon atoms.

Subject matter of the present invention is, therefore, a thermoplastic composition having an excellent balance of mechanical, physical and thermal properties and chemical resistance as weel as a good flowability in the molten state, comprising:
(C₁) a polyphenylene ether resin;
(C₂) a polyamide, and
(C₃) an aromatic nitro-derivative of the above reported formula (I).

The mixtures subject matter of the present invention can be prepared by any conventional mixing method. For example, the mixing can be carried out in the molten state and time and temperature are selected and determined time-to-time as a function of the composition. The temperatures are generally in the range of from 200 to 300°C.

Any known mixing unit can be utilized. The method can be continuous or discontinuous. Specifically, single-screw and two-screw extruders, Banbury type inner mixers, mixing rollers and the like can be used.

Although all the composition components can be introduced at the beginning and directly into the mixing unit, in some cases it is preferable to pre-mix one of the two resins, preferably polyphenylene ether, with the aromatic nitro-derivative of formula (I), before the mixing with the other resin.

Tests carried out by the Applicant have furthermore pointed out that the mechanical and physical properties of the compositions of the present invention can be further improved by carrying out the mixing of the above reported (C₁), (C₂) and (C₃) components in the presence of an antacid agent.

The invention comprises compatible mixtures of polyphenylene ether and polyamide in any proportion. Generally, the polyphenylene ether is present in an amount ranging between 5 and 95% by weight and, correspondingly, the polyamide is present in an amount ranging between 95 and 5% by weight, with respect to the total weight of the two resins.

A preferred composition comprises from 25 to 75% by weight of polyphenylene ether and, correspondingly, from 75 to 25% by weight of polyamide.

The compatibilizing agent of formula (I) is present in an amount at least sufficient to effect the compatibility of the two resinous components. The expression "compatibility" is intended to encompass an adequate dispersion of the two resins in a manner which provides useful thermoplastic compositions having acceptable properties and non-delaminating products.

Typically, at least 0.01 parts by weight of the compatibilizing agent (C₃) of formula (I) will be necessary per 100 parts by weight of components (C₁) and (C₂).

Preferred compositions are those containing approximately from 0.1 to about 2 parts by weight of the compatibilizing agent per 100 parts by weight of the two resins (C₁) and (C₂).

The amount of the antacid agent is not critical for the objects of the present invention, even if the best results as far as the physical and mechanical properties and particurarly the resilience are concerned, are obtained when the amount of the antacid agent is comprised between 0.1 and 10 parts by weight, preferably between 0.3 and 3 parts by weight, with respect to 100 parts by weight of the two (C₁) and (C₂) resins.

Therefore, a preferred composition of the present invention comprises:
- 100 parts by weight of a mixture constituted by:
   - 25-75% by weight of a polyphenylene ether (C₁), and
   - 75-25% by weight of a polyamide (C₂);
- from 0.1 to 2 parts by weight of an aromatic nitro-derivative (C₃) having the above reported general formula (I), and
- from 0.1 to 10 parts by weight of an antacid agent.

The organic nitro-derivatives of the above reported formula (I) particularly suitable for the compositions of the present invention are those having the above reported formula wherein AR is a phenyl or naphthyl radical and X is oxygen or N-R₁ wherein R₁ is hydrogen or a radical selected from methyl, ethyl, propyl and butyl, cyclohexyl, phenyl or C₁-C₄ alkyl-phenyl.

Examples of aromatic nitro-derivatives of formula (I), which may be used in the compositions of the present invention include: 4-nitro-phthaloanhydride, N-methyl-4-nitro phthalimide and N-ethyl-4-nitro-phthalimide, N-propyl-4-nitrophthalimide, the corresponding products containing the nitro group in position 3, 5-nitro-N-methyl-1,8-naphthalimide, 5-nitro-N-methyl-2,3-naphthalimide and the like.

These aromatic nitro-derivatives are well known on the market and may be easily prepared according to the processes described, for example, in U.S. Patent Nos. 4,116,980; 3,933,852; 3,879,428; 3,874,867; 3,787,475; 4,902,809 and 4,990,627.

The polyphenylene ether (C₁) used in the compositions of the present invention is a well known polymer or copolymer broadly utilized in the industry, especially as engineering polymer, in appliances which require toughness and thermal stability.

These polyphenylene ether resins are polymers and copolymers which comprise a plurality of structural units having the following formula (II): 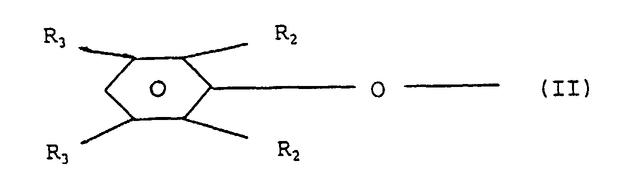 wherein:
each R₂ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₃ is independently hydrogen, a halogen atom, a primary or secondary alkyl radical containing from 1 to 7 carbon atoms, a substituted alkyl radical, phenyl, substituted phenyl, a C₁ - C7 alkyloxy radical, or a haloalkyloxy as defined for R₂.

Examples of R₂ and R₃ include: hydrogen, a halogen such as chlorine, bromine or fluorine, an alkyl radical or a substituted alkyl radical such as methyl, ethyl, n- and isopropyl, n-, sec-, iso- and tert- butyl, n-amyl, n-hexyl, 2,3-dimethylbutyl; chloro-ethyl, hydroxyethyl, phenylethyl, hydroxymethyl, carboxy-ethyl, methoxycarbonylethyl, cyanoethyl, aryl or substituted aryl radical such as phenyl, chlorophenyl, methylphenyl, dimethylphenyl, ethylphenyl; a benzyl radical or an allyl radical.

Polyphenylene ethers preferred in the present invention are those having formula: 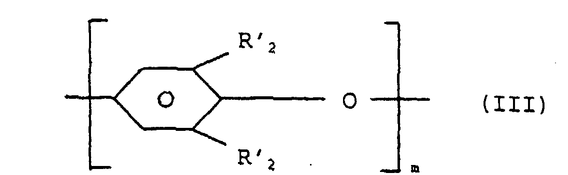 wherein R'₂ independently are an alkyl radical containing from 1 to 4 carbon atoms and m is at least 50 and preferably comprised between 60 and 600.

Illustrative examples of polyphenylene ethers which are particularly suitable for the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like; poly(2,6-dimethyl-1,4-phenylene)ether is the most preferred.

The term polyphenylene ether (C₁), whenever used in the present specification and in the claims, includes both the homopolymers and the copolymers containing the structural units of formula (II) indicated hereinbefore, such as, for example, the copolymers comprising units deriving from 2,6-dimethylphenol and 2,3,6-trimethylphenol; as well as the grafted copolymers prepared by grafting one or more vinyl monomers such as acrylonitrile or vinylaromatic compounds such as styrene or polymers such as polystyrene or elastomers onto the polyphenylene ether chain.

The polyphenylene ethers generally have an average molecular weight (determined by gel permeation chromatography) ranging from 5,000 to 120,000, and their inherent viscosity is higher than 0.1 dl/g and preferably ranges from 0.30 to 0.90 dl/g, measured in chloroform at 23°C.

These polyphenylene ethers can be produced by oxidation of a phenol compound with oxygen or an oxygen-containing gas, preferably in the presence of a catalyst for the oxidative coupling, as described in U.S. Patent Nos. 3,226,361; 3,234,183; 3,306,874; 3,306,875; 3,257,357; 3,257,358; 3,337,501; 3,787,361; 3,956,242; 3,962,181; 3,965,069; 4,075,174; 4,093,595-598; 4,102,865; 4,184,034; 4,385,168; etc.

The polyamides (C₂) which are suited for the preparation of the compositions of the present invention can be prepared by polymerization of monoamino-monocarboxilic acids or the corresponding lactams having at least two carbon atoms between the amino group and the carboxilic group; or by polymerization of substantially equimolar amounts of a diamine, which contains at least two carbon atoms between the aminic groups, and a bicarboxilic acid; or still by polymerization of a monoamino-monocarboxylic acid or a lactam thereof, as above defined, along with a substantially equimolar amount of a diamine and of a dicarboxilic acid. The dicarboxilic acid can be utilized in the form of a derivative thereof such as, for example, an ester or an acid chloride.

The term "substantially equimolar" is used to designate both strictly equimolar amounts and little deviations therefrom, as it is required by the conventional techniques in order to stabilize the viscosity of the resulting polyamides.

Examples of monoamino-monocarboxylic acids or lactams thereof, which are utilizable for preparing the polyamides, comprise the compounds containing from 2 to 16 carbon atoms between the aminic group and the carboxylic group, said carbon atoms forming a ring including also the -CO-NH- group in the case of lactams. Typical examples of monoamino-monocarboxylic acids and lactams are: omega-aminocaproic acid, butyrolactam, pivalolactam, caprolactam, capryl-lactam, enentolactam, undecanolactam, dodecanolactam, 3- and 4-amino-benzoic acid, etc.

Diamines which are suitable for being utilized in the preparation of the polyamides comprise aliphatic alkyldiamines having a straight or branched chain, aryldiamines and alkylaryl-diamines.

Examples of diamines are the ones having the following general formula (IV):

H₂N - (CH₂)ₚ - NH₂ (IV)

wherein p is an integer ranging from 2 to 16, such as trimethylene diamine, tetramethylene diamine, pentamethylene diamine, octamethylene diamine and, particularly, hexamethylene diamine, as well as trimethyl hexamethylene diammine, metaphenylene diamine, meta-xylilene diamine and the like.

The dicarboxylic acids can be either aliphatic or aromatic. Among the aromatic acids, isophthalic acid and terephthalic acid are to be cited. Among the aliphatic acids there are preferred those having the following general formula (V):

HOOC - R₄ - COOH (V)

wherein R₄ is a divalent aliphatic group containing at least 2 carbon atoms and, preferably, from 2 to 18 carbon atoms, such as e.g. sebacic acid, octadecandioic acid, suberic acid, glutaric acid, pimelic acid and adipic acid.

Typical examples of polyamides or nylons, as usually are called are: nylon 6; nylon 6,6; nylon 11; nylon 12; nylon 4,6; nylon 6,10; nylon 6,12.

Partially aromatic polyamides too can be utilized in the compositions of the present invention. The term "partially aromatic polyamides" means those polyamides which are obtained by substituting, in part or in whole, an aliphatic residue of an aliphatic nylon with an aromatic residue.

For example, the polyamides resulting from terephthalic and/or isophthalic acid and trimethyl-hexamethylenediamine; from adipic acid and meta-xylilene diamine, from adipic acid or azelaic acid and 2,2-bis-(p-aminocyclohexyl)propane, or from terephthalic acid and 4,4'-diamino-dicyclohexyl-methane.

Mixtures and/or copolymers of two or more of the above polyamides or of prepolymers thereof can be used as well.

Preferred polyamides are nylon 6, nylon 6,6, nylon 11 and nylon 12; more particularly, nylon 6 and nylon 6,6.

The average molecular weight of the polyamides is advantageously higher than 4,000, and preferably comprised between 10,000 and up to 50,000, and the melting point thereof is preferably higher than 200°C.

The term polyamide (C₂), whenever used in the present specification and in the claims, also comprises the block polyamides of the type (A-B)ₘ and (A-B-A)ₘ, in which A is a polyamide block and B is a polyalkylene glycol block and m is an integer such that the average ponderal molecular weight is comprised between 4,300 and 50,000, preferably between 8,500 and 30,000; as well as the resilient or super-resilient polyamides obtained by blending the conventional polyamides with an elastomeric polymer or copolymer.

These resilient or super resilient polyamides are well known on the market and described, for example, in USA Patent Nos. 4,174,358; 4,474,927; 4,346,194; 4,251,644 the contents of which is integral part of the present description as reference.

In the embodiment of the compositions of the present invention, the addition of an antacid agent can be suitable and advisable in order to further improve the physical properties, particularly the resilience or the impact resistance of the compositions.

Such antacid agents are well known in the art and, tipically, they are oxides and/or carbonates of metals apertain to I, II, III and/or IV Group(s) of the Periodic System and can be of synthetic or natural type. The basic carbonates of II A and III A Group metals, generally known by the trade name IDROTALCITE^{R} are particularly preferred for the object of the present invention. Such basic carbonates can be natural and derive from mineral deposites in the Urals of the Soviet Union and also in Snarum (Norway) or of synthetic origin.

The natural basic carbonates have formula:

Mg₆ Al₂ (OH)₁₆ CO₃ .4H₂O

and the synthetic ones:

Mg_{4.5} Al₂ (OH)₁₃ CO₃ .3.5 H₂O

first prepared on industrial scale in 1966 by Kyowa Chemical Industry Co.,Ltd.

The synthetic basic carbonates are available on the market with the trade name IDROTALCITE DHT-4A^{R} produced and sold by the REHEIS CHEMICAL Co. Eexterveen - THE NETHERLANDS.

A polymeric modifier compatible with the polyphenylene ether and the polyamide can be added to the compositions of the present invention, in order to further improve the physical properties, particularly the impact resistance.

The amount of the polymeric modifier can preferably range from 5 to 50 parts by weight with respect to 100 parts by weight of the composition (C₁) + (C₂) + (C₃). These modifiers are well known in the art and typically derive from one or more monomers selected from the group consisting of olefins, vinyl aromatic monomers, acrylic or alkylacrylic acids and their ester derivatives as well as conjugated dienes.

Particularly preferred modifiers are rubbery high-molecular weight materials including natural and synthetic polymeric materials showing elasticity at room temperature. These modifiers can be homopolymer and copolymer, including random, block, radial block, grafted and core-shell copolymers as well as combinations thereof.

Specific examples of polymeric modifiers include: high density polyethylene, medium density polyethylene and low density polyethylene, linear low density polyethylene, polypropylene, poly(1-butene), propylene-ethylene copolymers, copolymers of ethylene with other copolymerizable monomers such as vinyl acetate, acrylic acid or methacrylic acid as well as the ester derivatives thereof such as ethyl acrylate or methylmethacrylate; ionomer resins containing side carboxylic groups which can be wholly or partially neutralized with metal ions.

Examples of rubbery polymeric modifiers are vinylaromatic monomer-hydrogenated, partially hydrogenated or not-hydrogenated conjugated diene block polymers, including SB and SBS type block polymers, such as polystyrene-polybutadiene, polystyrene-polyisoprene-polystyrene, poly(alphamethylstyrene)-polybutadiene, poly(alpha-methylstyrene)-polyisoprene-poly(alpha-methylstyrene), as well as the polystyrene-ethylene-propylene rubbery block polymers (SEP); such rubbery polymers are available commercially from Phillips under the tradename SOLPRENE^{R}, from SHELL Company under the tradenames CARIFLEX^{R}, KRATON^{R} D or KRATON^{R} G.

Other types of rubbery modifiers which can be used in the compositions of the present invention are polybutadiene, butadiene-styrene copolymers, poly(chlorobutadiene), ethylenepropylene-diene monomer (EPDM), or the core-shell graft copolymers having the core constituted by a conjugated diene or a cross-linked acrylic rubber and one or more shells polymerized thereon and derived from a vinyl aromatic monomer and/or acrylic monomer alone or in combination with other vinyl monomers. Such core-shell copolymers are well known and commercially available with the tradenames PARALOID^{R} EXL 3300 and EXL 2607 of Rohm & Haas and described in U.S. Patent Nos. 3,808,180; 4,034,013; 3,096,202; 4,180,494 and 4,292,233.

The rubbery polymeric modifier can be too an olefinic elastomer containing a vinyl aromatic polymer grafted thereon, in which the olefinic elastomer is a rubbery copolymer, having a Mooney viscosity ranging from 10 to 150 ML-4 at 100°C, of at least two different straight chain alpha-mono-olefins such as ethylene, propylene, butene-1, octene-1, and the like with at least another copolymerizable monomer, generally a polyene, and typically a non-conjugated diene. Preferably one of the alpha mono-olefins is ethylene together with another alpha mono-olefin having a longer chain. The weight ratio of the ethylene to the other alpha-mono-olefin in the rubbery copolymer is usually in the range of from 20/80 to 80/20.

Particularly preferred copolymers are the ethylene-propylene-non-conjugated diene terpolymer in which the non-conjugated diene can be cyclic or acyclic such as: 5-methylene-2-norbornene, 5-ethylidene-2-norbornene, 5-isopropylidene-2-norbornene, 1,4-pentadiene, 1,4-hexadiene, 1,5-hexadiene, 1,5-heptadiene, 1,7,9-dodecatriene, methyl-1,5-eptadiene, 2,5-norbornadiene, cyclo-1,5-octadiene, dicyclopentadiene, tetrahydroindene, 5-methyl-tetrahydroindene, etc. The diene content ranges from about 2 to 20% by weight and, preferably, from 8 to 18% by weight of diene monomeric units in the rubbery terpolymer. Particularly interesting results are obtained by using a rubbery terpolymer having a Mooney viscosity (ML-4), determined at 100°C, ranging from 30 to 90 , and a iodine number higher than 5, preferably ranging from 10 to 40.

The vinyl aromatic polymer grafted on the olefinic elastomer includes monomeric units of formula: 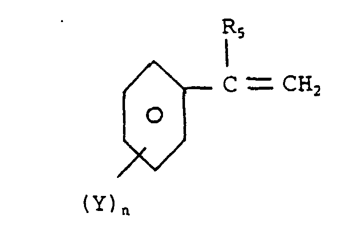 wherein:
R₅ represents a hydrogen, a halogen or an alkyl radical having from 1 to 4 carbon atoms;
Y represents a hydrogen, a halogen or an alkyl radical having from 1 to 4 carbon atoms and
n is 0 or an integer comprised between 1 and 5.

Examples of vinyl aromatic monomers having the above-reported general formula are: styrene; methylstyrene; mono-, di-, tri-, tetra-, and penta-chlorostyrene and the corresponding alpha-methyl-styrenes; styrenes and corresponding alpha-methylstyrenes which are alkylated in the nucleus such as ortho- and para-methylstyrenes; ortho- and para ethylstyrenes; ortho- and para-methyl-alpha-methylstyrenes, etc.

These monomers can be utilized either alone or in admixture with one another.

It is understood that in the grafting polymerization not all the vinyl aromatic monomer is really grafted on the rubbery substrate; a portion of the monomer forms a free polymer which is present in physical admixture with the grafted polymer.

Preferably, the average molecular weight of the vinyl aromatic polymer favourably influences the impact strength characteristics of the mixtures. Thus, for example, good impact strength results are obtained with vinylaromatic polymers having a molecular weight higher than 100,000 and up to 2,000,000.

The amount of vinyl aromatic monomer grafted on the olefinic elastomer is not critical and generally ranges from 10 to 50% by weight with respect to the grafted elastomer; while the amount of free vinyl aromatic polymer ranges from 10 to 50% by weight.

The amount of grafted monomer on the polymer can be determined by extraction of the product with a solvent of the not-grafted resin.

In addition to components (C₁), (C₂), and (C₃), the compositions of the present invention can contain reinforcing additives such as for example glass fibres, carbon fibres, organic and inorganic high-modulus fibres, metal fibres, inorganic fillers, etc., as well as antiflame agents, dyestuffs, pigments, stabilizers, lubricants, etc., which are well-known to those skilled in the art.

The reinforcing additives can be used in amounts generally not exceeding 50% by weight and, preferably, not higher than 30% by weight calculated on the total composition.

Particularly preferred reinforcing additives are the glass fibres, which can be untreated or, better, treated with silanes or titanates, as it is well-known to the technicians and to the manufacturers of said fibres.

Suitable stabilizers to be used in the compositions of the present invention comprise many of the known thermal stabilizers and antioxidants suitable and generally utilized for the specific engineering polymer, the polyphenylene ether resins or the polymeric modifiers. For example, liquid phosphates and hindered phenols can be added to the compositions of the present invention, in amounts which can range from 0.05 to 5% by weight.

The compositions subject matter of the present invention are easily processable by injection molding or by extrusion and exhibit a complex of properties which make them suited to be utilized for the manufacture of shaped articles having a high impact strength along with a good thermal stability and a low water sensitivity. Thanks to these properties, the compositions of the present invention find the use in the automotive sector, for the manufacture of articles which can be furnace-painted, parts which enter into contact with motors, houshold electric apparatus, electronic articles and technical articles in general in the form of cups, boxes, containers, panels, sheets, rods, etc.

In order to better understand the present invention and to reduce it to practice, a few illustrative examples are given hereinafter, which however are not limitative of the scope of the invention.

### EXAMPLES 1 to 5

Into a BRABENDER plastograph, equipped with a 50 ml cell and heated at 240 °C, there was introduced a mixture, prepared at room temperature, consisting of:
- poly(2,6-dimethyl-1,4-phenylene)ether (PPE) having an intrinsic viscosity of 0.53 (in chloroform at 23°C), dissolved at 105 °C in 350 cc. of toluene; in the amount reported in the Table;
- 4-nitro-N-methyl phthalimide in the amount reported in the Table;
- IDROTALCITE^{R} DHT-4A, in the amount reported in the Table; and
- a partially hydrogenated diblock copolymer of SEP type containing 37% by weight of styrene and sold by SHELL under the tradename KRATON^{R} G 1701, in the amount reported in the Table.

The BRABENDER mastication speed was programmed according to a cycle of 50 r.p.m. for a time of 1 minute and 100 r.p.m. for a time of 2 minutes.

The mixture leaving the first plastograph BRABENDER was fed to a second plastograph of the same type of the first one together with nylon 6 and poly(2,6-dimethyl-1,4-phenylene)ether in the following proportions:
- 33.3% by weight of the mixture leaving the first plastograph;
- 41% by weight of nylon 6 produced by the firm ECP EniChem Polimeri S.r.l. under the tradename "TERNIL^{R} B 27", having an average molecular weight of 18,000, and
- 25.7% by weight of poly(2,6,-dimethyl-1,4-phenylene)ether of the above reported type.

The operative conditions were the same of the first plastograph.

The resulting mixture was ground, compression molded at 260 °C and characterized.

The characteristics of the thus obtained mixture are listed in the following Table.

### EXAMPLES 6-7

The operative conditions of examples 1 and 3 were repeated by substituting 4-nitro-N-methyl phthalimide by 4-nitro-phthaloanhydride in the amount reported in the Table.

The characteristics of the thus obtained mixtures are listed in the following Table.

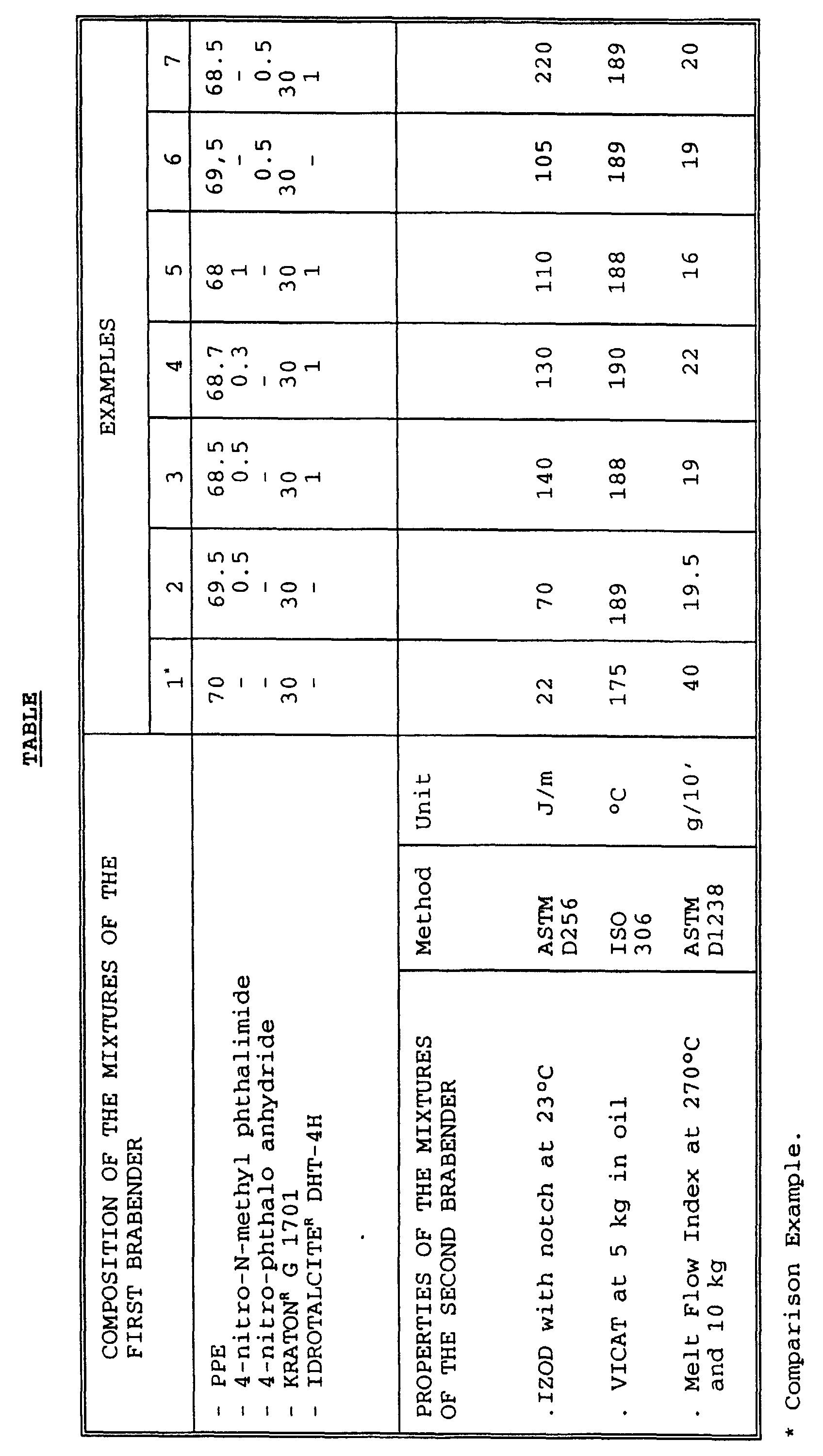

## Claims

1. A thermoplastic composition comprising:
(C₁) a polyphenylene ether resin;
(C₂) a polyamide, and
(C₃) an aromatic nitro-derivative having general formula: 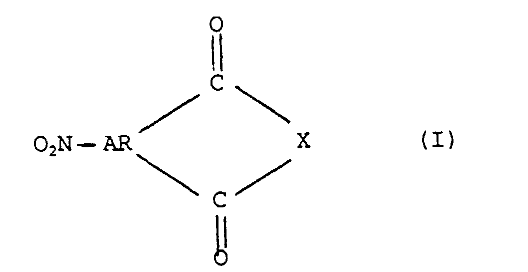 wherein:
AR may be phenylene or an aromatic radical constituted by 2 or 3 condensed rings; and
X is oxygen or N-R₁ wherein R₁ represents hydrogen, a monovalent organic radical selected from the group consisting of an alkyl group containing from 1 to 10 carbon atoms, preferably from 1 to 4 carbon atoms, a cyclo-alkyl radical containing from 3 to 8 carbon atoms and an aromatic radical having from 6 to 20 carbon atoms.

2. The thermoplastic composition according to claim 1, wherein the aromatic nitro-derivative has general formula (I) wherein AR is a phenyl or naphthyl radical and X is oxygen or N-R₁ wherein R₁ is hydrogen or a radical selected from methyl, ethyl, propyl and butyl, cyclohexyl, phenyl or C₁-C₄ alkyl-phenyl.

3. The thermoplastic composition according to claim 1 or 2, wherein the aromatic nitro-derivative of formula (I) is selected from the group consisting of 4-nitro-phthaloanhydride, N-methyl-4-nitro phthalimide, N-ethyl-4-nitro-phthalimide, N-propyl-4-nitro-phthalimide, and the corresponding products containing the nitro group in position 3, 5-nitro-N-methyl-1,8-naphthalimide and 5-nitro-N-methyl-2,3-naphthalimide.

4. The thermoplastic composition according to anyone of the preceding claims, characterized in that it includes an antacid agent.

5. The thermoplastic composition according to claim 4, wherein the antacid agent is an oxide and/or a carbonate of metals apertain to I, II, III and/or IV Group(s) of the Periodic System.

6. The thermoplatic composition according to claim 4 or 5, wherein the antacid agent is a basic carbonate of II A and III A Group metals of the Periodic System.

7. The thermoplastic composition according to claim 6, wherein the basic carbonate is of natural origin and corresponds to the formula: Mg₆ Al₂ (OH)₁₆ CO₃ .4H₂O.

8. The thermoplastic composition according to anyone of the preceding claims, wherein the amount of the polyphenylene ether(C₁) is comprised between 5 and 95% by weight, the amount of the polyamide is between 95 and 5% by weight, with respect to the total weight of both the resins (C₁) and (C₂) and the amount of the aromatic nitro-derivative (C₃) of formula (I) is at least 0.01 parts by weight with respect to 100 parts by weight of the two resins (C₁) and (C₂).

9. The thermoplastic composition according to anyone of the preceding claims from 4 to 8, wherein the amount of the antacid agent is comprised between 0.1 and 10 parts by weight with respect to 100 parts by weight of the two (C₁) and (C₂) resins.

10. The thermoplastic composition according to anyone of the preceding claims, comprising:
- 100 parts by weight of a mixture constituted by:
25-75% by weight of a polyphenylene ether (C₁), and
75-25% by weight of a polyamide (C₂);
- from 0.1 to 2 parts by weight of an aromatic nitro-derivative (C₃) having formula (I), and
- from 0.1 to 10 parts by weight of an antacid agent.

11. The thermoplastic composition according to anyone of the preceding claims, wherein the polyphenylene ether is a polymer or a copolymer containing a plurality of structural units of formula: 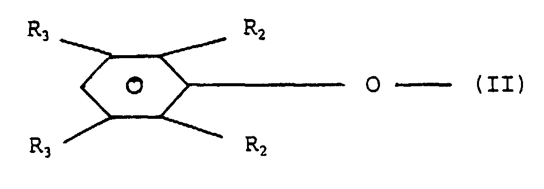 wherein:
each R₂ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₃ is independently hydrogen, a halogen atom, a primary or secondary alkyl radical containing from 1 to 7 carbon atoms, a substituted alkyl radical, phenyl, substituted phenyl, a C₁ - C7 alkyloxy radical, or a haloalkyloxy as defined for R₂.

12. The thermoplastic composition according to claim 11, wherein the polyphenylene ether has the formula: 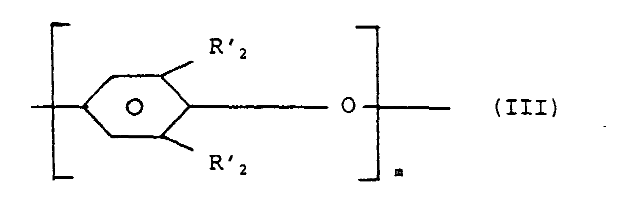 wherein R'₂, independently from each other, is an alkyl radical containing from 1 to 4 carbon atoms and "m" is at least 50 and preferably comprised between 60 and 600.

13. The thermoplastic composition according to anyone of the preceding claims, wherein the polyphenylene ether has a number average molecular weight ranging from 5,000 to 120,000 and an inherent viscosity higher than 0.1 dl/g and, preferably comprised between 0.30 and 0.90 dl/g, measured in chloroform at 23°C.

14. The thermoplastic composition according to anyone of the preceding claims, wherein the polyamide is nylon 6 or nylon 6,6 having a molecular weight higher than 10,000, preferably higher than 15,000 and up to 40,000.

15. The thermoplastic composition according to anyone of the preceding claims, comprising in addition a polymeric modifier in an amount comprised between 5 and 50 parts by weight of the composition.

16. The thermoplastic composition according to claim 15, wherein the polymeric modifier is selected from the group consisting of polyethylene, polypropylene, propylene-ethylene copolymers, copolymers of ethylene with other copolymerizable monomers, vinylaromatic monomer-hydrogenated, partially hydrogenated or not hydrogenated conjugated diene block polymers, polystyrene-ethylene-propylene rubbery block polymers (SEP), butadiene polymers, EPDM, core-shell graft copolymers and an olefinic elastomer containing a vinyl aromatic polymer, having preferably a molecular weight higher than 100,000 and up to 2,000,000, grafted thereon.

17. The thermoplastic composition according to anyone of the preceding claims, containing in addition reinforcing additives, antiflame agents, dyestuffs, pigments, stabilizers, and/or lubricants.

18. The thermoplastic composition according to claim 17, wherein the reinforcing additive is selected from the group consisting of glass fibres, carbon fibres, organic or inorganic high modulus fibres and metal fibres, in amoumts not exceeding 50% by weight with respect to the total composition.

## Patentansprüche

1. Thermoplastische Zusammensetzung, umfassend:
(C₁) ein Polyphenylenetherharz,
(C₂) ein Polyamid und
(C₃) ein aromatisches Nitroderivat mit der allgemeinen Formel 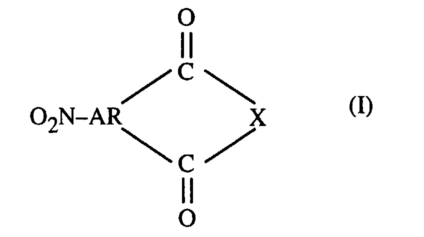
in der
AR eine Phenylengruppe oder ein aromatischer Rest, der aus 2 oder 3 annelierten Ringen besteht, sein kann; und
X für Sauerstoff oder N-R₁ steht, wobei R₁ für ein Wasserstoffatom, einen einwertigen organischen Rest, ausgewählt aus der Gruppe Alkylrest mit 1 bis 10 Kohlenstoffatomen, vorzugsweise 1 bis 4 Kohlenstoffatomen, Cycloalkylrest mit 3 bis 8 Kohlenstoffatomen und aromatischer Rest mit 6 bis 20 Kohlenstoffatomen, steht.

2. Thermoplastische Zusammensetzung nach Anspruch 1, in der das aromatische Nitroderivat die allgemeine Formel (I) hat, in der AR eine Phenyl- oder Naphthylgruppe ist und X für ein Sauerstoffatom oder die Gruppe N-R₁ steht, wobei R₁ für ein Wasserstoffatom oder einen Rest, ausgewählt aus Methyl-, Ethyl-, Propyl- und Butylgruppen, Cyclohexyl-, Phenyl- oder C₁-C₄-Alkylphenylgruppen, steht.

3. Thermoplastische Zusammensetzung nach Anspruch 1 oder 2, in der das aromatische Nitroderivat der Formel (I) aus der Gruppe 4-Nitrophthalsäureanhydrid, N-Methyl-4-nitro-phthalimid, N-Ethyl-4-nitrophthalimid, N-Propyl-4-nitrophthalimid und die entsprechenden Produkte mit der Nitrogruppe in der 3-Position, 5-Nitro-N-methyl-1,8-naphthalimid und 5-Nitro-N-methyl-2,3-naphthalimid ausgewählt ist.

4. Thermoplastische Zusammensetzung nach einem der vorstehenden Ansprüche, dadurch gekennzeichnet, daß sie ein Säureschutzmittel einschließt.

5. Thermoplastische Zusammensetzung nach Anspruch 4, in der das Säureschutzmittel ein Oxid und/oder Carbonat von Metallen ist, die zu den Gruppen I, II, III und/oder IV des Periodensystems gehören.

6. Thermoplastische Zusammensetzung nach Anspruch 4 oder 5, in der das Säureschutzmittel ein basisches Carbonat von Metallen der Gruppen IIA und IIIA des Periodensystems ist.

7. Thermoplastische Zusammensetzung nach Anspruch 6, in der das basische Carbonat natürlichen Ursprungs ist und der Formel Mg₆Al₂(OH)₁₆CO₃·4H₂O entspricht.

8. Thermoplastische Zusammensetzung nach einem der vorstehenden Ansprüche, in der die Menge an Polyphenylenether (C₁) zwischen 5 und 95 Gew.% liegt, die Menge an Polyamid, bezogen auf das Gesamtgewicht der beiden Harze (C₁) und (C₂), zwischen 95 und 5 Gew.% liegt, und die Menge an aromatischem Nitroderivat (C₃) der Formel (I), bezogen auf 100 Gewichtsteile der beiden Harze (C₁) und (C₂), wenigstens 0,01 Gewichtsteile beträgt.

9. Thermoplastische Zusammensetzung nach einem der vorstehenden Ansprüche 4 bis 8, in der die Menge an Säureschutzmittel, bezogen auf 100 Gewichtsteile der beiden Harze (C₁) und (C₂), zwischen 0,1 und 10 Gewichtsteilen liegt.

10. Thermoplastische Zusammensetzung nach einem der vorstehenden Ansprüche, umfassend:
• 100 Gewichtsteile eines Gemischs, bestehend aus 25 - 75 Gew.% eines Polyphenylenethers (C₁) und 75 - 25 Gew.% eines Polyamids (C₂),
• 0,1 bis 2 Gewichtsteile eines aromatischen Nitroderivats (C₃) der Formel (I), und
• 0,1 bis 10 Gewichtsteile eines Säureschutzmittels.

11. Thermoplastische Zusammensetzung nach einem der vorstehenden Ansprüche, in der der Polyphenylenether ein Polymer oder Copolymer ist, das eine Vielzahl von strukturellen Einheiten der Formel 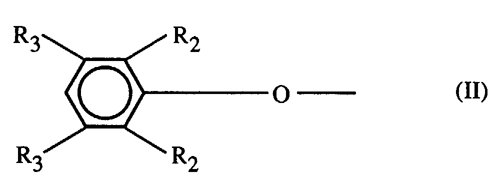 enthält, wobei
jeder Rest R₂ unabhängig voneinander für ein Halogenatom, einen primären oder sekundären Alkylrest mit 1 bis 7 Kohlenstoffatomen, einen substituierten Alkylrest, eine Phenylgruppe, eine substituierte Phenylgruppe, einen C₁-C₇-Alkyloxyrest oder einen Halogenalkyloxyrest, in dem wenigstens 2 Kohlenstoffatome die Halogen- und Sauerstoffatome trennen, steht;
jeder Rest R₃ unabhängig voneinander für ein Wasserstoffatom, ein Halogenatom, einen primären oder sekundären Alkylrest mit 1 bis 7 Kohlenstoffatomen, einen substituierten Alkylrest, eine Phenylgruppe, eine substituierte Phenylgruppe, einen C₁-C₇-Alkyloxyrest oder einen Halogenalkyloxyrest, wie für R₂ definiert, steht.

12. Thermoplastische Zusammensetzung nach Anspruch 11, in der der Polyphenylenether die Formel 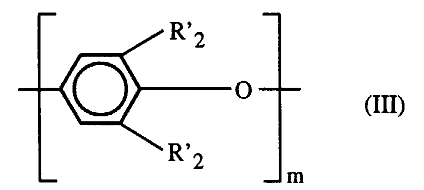 hat, in der R'₂ unabhängig voneinander für einen Alkylrest mit 1 bis 4 Kohlenstoffatomen steht und m wenigstens 50 beträgt und vorzugsweise zwischen 60 und 600 liegt.

13. Thermoplastische Zusammensetzung nach einem der vorstehenden Ansprüche, in der der Polyphenylenether ein Zahlenmittel des Molekulargewichts im Bereich von 5000 bis 120000 hat und eine innere Viskosität, gemessen bei 23 °C in Chloroform, höher als 0,1 dl/g und vorzugsweise zwischen 0,30 und 0,90 dl/g aufweist.

14. Thermoplastische Zusammensetzung nach einem der vorstehenden Ansprüche, in der das Polyamid ein Nylon-6 oder Nylon-6,6 ist, das ein Molekulargewicht höher als 10000, vorzugsweise höher als 15000 und bis 40000 aufweist.

15. Thermoplastische Zusammensetzung nach einem der vorstehenden Ansprüche, zusätzlich umfassend ein polymeres Modifizierungsmittel in einer Menge zwischen 5 und 50 Gewichtsteilen der Zusammensetzung.

16. Thermoplastische Zusammensetzung nach Anspruch 15, in der das polymere Modifizierungsmittel ausgewählt ist aus der Gruppe Polyethylen, Polypropylen, Propylen-Ethylen-Copolymere, Copolymere von Ethylen mit anderen copolymerisierbaren Monomeren, hydrierte, teilweise hydrierte oder nicht hydrierte Blockpolymere aus vinylaromatischen Monomeren und konjugierten Dienen, kautschukartige Polystyrol-Ethylen-Propylen-Blockpolymere (SEP), Butadienpolymere, EPDM, Kern-Hülle-Pfropfcopolymere und olefinisches Elastomer, das ein vinylaromatisches Polymer, vorzugsweise mit einem Molekulargewicht höher als 100000 und bis zu 2000000, aufgepfropft enthält.

17. Thermoplastische Zusammensetzung nach einem der vorstehenden Ansprüche, zusätzlich enthaltend verstärkende Zusatzstoffe, Flammschutzmittel, Farbstoffe, Pigmente, Stabilisatoren und/oder Schmiermittel.

18. Thermoplastische Zusammensetzung nach Anspruch 17, in der der verstärkende Zusatzstoff in Mengen, die 50 Gew.% bezogen auf die Gesamtzusammensetzung nicht übersteigen, aus der Gruppe Glasfasern, Kohlefasern, organische oder anorganische Fasern mit hohem Modul und Metallfasern ausgewählt ist.

## Revendications

1. Composition thermoplastique comprenant:
(C₁) une résine de polyphénylène éther;
(C₂) un polyamide et
(C₃) un dérivé nitro aromatique ayant la formule générale: 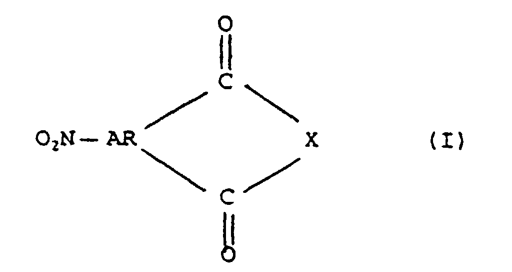
où:
AR peut être phénylène ou un radical aromatique constitué par 2 ou 3 cycles condensés, et
X est l'oxygène ou N-R₁ où R₁ représente l'hydrogène, un radical organique monovalent choisi dans le groupe consistant en un groupe alkyle contenant de 1 à 10 atomes de carbone, de préférence de 1 à 4 atomes de carbone, un radical cycloalkyle contenant de 3 à 8 atomes de carbone et un radical aromatique ayant de 6 à 20 atomes de carbone.

2. Composition thermoplastique selon la revendication 1 où le dérivé nitro aromatique a la formule générale (I) où AR est un radical phényle ou naphtyle et X est l'oxygène ou N-R₁ où R₁ est l'hydrogène ou un radical choisi parmi méthyle, éthyle, propyle et butyle, cyclohexyle, phényle ou alkyle en C₁-C₄-phényle.

3. Composition thermoplastique selon la revendication 1 ou 2 où le dérivé nitro aromatique de formule (I) est choisi dans le groupe, consistant en le 4-nitro-phtaloanhydride, le N-méthyl-4-nitro-phtalimide, le N-éthyl-4-nitro-phtalimide, le N-propyl-4-nitro-phtalimide et les produits correspondants contenant le groupe nitro en position 3, le 5-nitro-N-méthyl-1,8-naphtalimide et le 5-nitro-N-méthyl-2,3-naphtalimide.

4. Composition thermoplastique selon l'une quelconque des revendications précédentes caractérisée en ce qu'elle comprend un agent anti-acide.

5. Composition thermoplastique selon la revendication 4 où l'agent anti-acide est un oxyde et/ou un carbonate de métaux appartenant au(x) groupe(s) I, II, III et/ou IV du système périodique.

6. Composition thermoplastique selon la revendication 4 ou 5 où l'agent anti-acide est un carbonate basique de métaux des groupes II A et III A du système périodique.

7. Composition thermoplastique selon la revendication 6 où le carbonate basique est d'origine naturelle et correspond à la formule: Mg₆Al₂(OH)₁₆CO₃,4H₂O.

8. Composition thermoplastique selon l'une quelconque des revendications précédentes où la quantité de polyphénylène éther (C₁) est comprise entre 5 et 95% en masse, la quantité de polyamide est comprise entre 95 et 5% en masse, par rapport à la masse totale des deux résines (C₁) et (C₂) et la quantité de dérivé nitro aromatique (C₃) de formule (I) est d'au moins 0,01 partie en masse pour 100 parties en masse des deux résines (C₁) et (C₂).

9. Composition thermoplastique selon l'une quelconque des revendications précédentes de 4 à 8 où la quantité d'agent anti-acide est comprise entre 0,1 et 10 parties en masse pour 100 parties en masse des deux résines (C₁) et (C₂).

10. Composition thermoplastique selon l'une quelconque des revendications précédentes comprenant:
- 100 parties en masse d'un mélange constitué par:
25-75% en masse d'un polyphénylène éther (C₁) et
75-25% en masse d'un polyamide (C₂);
- de 0,1 à 2 parties en masse d'un dérivé nitro aromatique (C₃) de formule (I) et
- de 0,1 à 10 parties en masse d'un agent anti-acide.

11. Composition thermoplastique selon l'une quelconque des revendications précédentes où le polyphénylène éther est un polymère ou un copolymère contenant une pluralité d'unités structurales de formule: 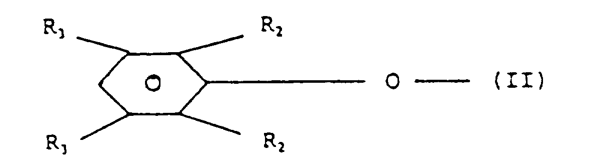 où:
chaque R₂ est indépendamment un atome d'halogène, un radical alkyle primaire ou secondaire contenant de 1 à 7 atomes de carbone, un radical alkyle substitué, phényle, phényle substitué, un radical alkyloxy en C₁ - C₇ ou un halogénoalkyloxy où au moins deux atomes de carbone séparent les atomes d'halogène et d'oxygène;
chaque R₃ est indépendamment l'hydrogène, un atome d'halogène, un radical alkyle primaire ou secondaire contenant de 1 à 7 atomes de carbone, un radical alkyle substitué, phényle, phényle substitué, un radical alkyloxy en C₁ - C₇ ou un halogénoalkyloxy comme défini pour R₂.

12. Composition thermoplastique selon la revendication 11 où le polyphénylène éther a la formule: 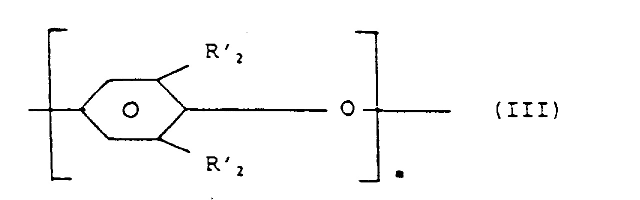 où chaque R'₂, indépendamment de l'autre, est un radical alkyle contenant de 1 à 4 atomes de carbone et m est au moins 50 et de préférence compris entre 60 et 600.

13. Composition thermoplastique selon l'une quelconque des revendications précédentes où le polyphénylène éther a une masse moléculaire moyenne en nombre comprise entre 5000 et 120000 et une viscosité inhérente supérieure à 0,1 dl/g et, de préférence, comprise entre 0,30 et 0,90 dl/g, mesurée dans le chloroforme à 23°C.

14. Composition thermoplastique selon l'une quelconque des revendications précédentes où le polyamide est le Nylon 6 ou le Nylon 6,6 ayant une masse moléculaire supérieure à 10000, de préférence supérieure à 15000 et pouvant atteindre 40000.

15. Composition thermoplastique selon l'une quelconque des revendications précédentes comprenant en plus un modificateur polymérique en une quantité comprise entre 5 et 50 parties par rapport à la masse de la composition.

16. Composition thermoplastique selon la revendication 15 où le modificateur polymérique est choisi dans le groupe consistant en le polyéthylène, le polypropylène, les copolymères propylène-éthylène, les copolymères d'éthylène avec d'autres monomères copolymérisables, les polymères séquencés monomère vinylaromatique-diène conjugué hydrogéné, partiellement hydrogéné ou non hydrogéné, les polymères séquences caoutchouteux polystyrène-éthylène-propylène (SEP), les polymères de butadiène, EPDM, les copolymères greffés noyau-enveloppe et un élastomère oléfinique contenant un polymère vinylaromatique, ayant de préférence une masse moléculaire supérieure à 100000 et pouvant atteindre 2000000, greffé sur lui.

17. Composition thermoplastique selon l'une quelconque des revendications précédentes contenant en plus des additifs de renforcement, des agents antiflammes, des colorants, des pigments, des stabilisants et/ou des lubrifiants.

18. Composition thermoplastique selon la revendication 17 où l'additif de renforcement est choisi dans le groupe consistant en les fibres de verre, les fibres de carbone, les fibres organique ou inorganiques à haut module et les fibres métalliques, en des quantités ne dépassant pas 50% en masse par rapport à la composition totale.
